# EUROPEAN PATENT SPECIFICATION

(11) **EP 4 223 631 B1**
(45) Date of publication and mention of the grant of the patent: **03.06.2026**
(21) Application number: 22275012.7
(22) Date of filing: 07.02.2022
(51) Int. Cl.: B64C 13/28, F16H 25/00, B64F 5/40

(54) **LOCKPIN CONNECTION AND METHOD**
SPERRBOLZENVERBINDUNG UND VERFAHREN
CONNEXION DE GOUPILLE DE VERROUILLAGE ET PROCÉDÉ

(43) Date of publication of application: 09.08.2023
(73) Proprietor: Goodrich Actuation Systems Limited, Solihull, West Midlands B90 4SS (GB)
(72) Inventor: BUTRIMAVICIUS, Karolis, Wolverhampton (GB); SMITH, Paul, Broseley (GB); TIMMS, Mark David, Wolverhampton (GB)
(74) Representative: Casalonga

(56) References cited:
- EP-A1- 3 575 204
- EP-A2- 2 604 514
- US-A1- 2012 304 787
- US-A1- 2017 305 565
- US-B2- 9 416 894

## Description

### TECHNICAL FIELD

This disclosure relates to a connection and method of operating a lockpin - for example, a lockpin provided on a foldable wing tip.

### BACKGROUND

Foldable wings are used in aviation to increase the efficiency of an aircraft. These wings are locked 'in-flight' by load bearing lockpins to prevent the wing from moving. For maintenance purposes, the lockpin needs to be accessible and easily removed in case of damage or replacement

There is a need for improved lockpin arrangements on foldable wings that are reduced in size and easily removable for maintenance purposes. US 2012/304787 relates to a telescopic actuator. EP 2 604 514 relates to an automatically locking linear actuator. EP 3 575 204 relates to a latching device for a wing arrangement.

### SUMMARY

In one aspect, there is provided an actuator arrangement according to claim 1 that includes an actuator screwshaft configured to receive a female connector, a lockpin having a male connector that is connected to the female connector. When the actuator screwshaft is rotated, in use, the lockpin is configured to move from a first position to a second position.

Further, the first position may be a locked position or an unlocked position, and the second position may be a locked position when the first position is an unlocked position, or an unlocked position when the first position is a locked position. Further, the lockpin includes a first end and a second end, wherein the second end may include a recess configured to receive a protrusion of the male connector, and wherein the second end may include a shoulder portion. When moving the lockpin from the locked position to the unlocked position, the female connector may be configured to contact the shoulder portion of the second end of the lockpin, and the female connector may be configured to apply a force to the shoulder portion to move the lockpin from the locked position to the unlocked position. When moving the lockpin from the unlocked position to the locked position, the protrusion of the male connector may be configured to contact the shoulder portion of the second end of the lockpin, and the protrusion of the male connector may be configured to apply a force to the shoulder portion to move the lockpin from the unlocked position to the locked position. When the lockpin is in a locked position, the recess and shoulder may be configured to allow radial movement of the lockpin to prevent load transfer to an actuator housing.

In another aspect, there is provided a kit according to claim 6 for connecting a lockpin to an actuator arrangement according to claims 1-5.

The kit includes an actuator arrangement having a female connector and a lockpin having a male connector configured to connect to the female connector. Further, the male connector may include at least one hook and the female connector may include at least one opening and at least one groove. The at least one opening and the at least one groove may be configured to receive the at least one hook of the male connector. The female connector may include at least one spring configured to bias the at least one hook of the male connector to the at least one groove of the female connector.

The kit may further comprise a tool configured to connect the male connector to the female connector. The tool may include a first end and a second end, and the first end may be configured to receive the male connector. Further, the lockpin may further comprise a central bore, and the first end of the tool may be configured to insert the male connector through the central bore of the lockpin to mate with the female connector of the actuator arrangement. The tool may include a handle that is configured to rotate the tool such that the male connector connects to the female connector.

In another aspect, there is provided a method according to claim 12 of connecting a lockpin to an actuator arrangement according to claim 1.

The method includes providing a tool having a first end and a second end, wherein the tool receives a male connector at the first end, moving the first end of the tool through a central bore of a lockpin such that the male connector engages with the female connector, rotating the tool such that the male connector rotates to retain its position in a groove provided in the female connector, and removing the tool.

Further, the male connector may include at least one hook and the female connector may include at least one opening and at least one groove. The at least one opening and the at least one groove may be configured to receive the at least one hook of the male connector, wherein, when the male connector engages the female connector, the at least one hook of the male connector moves through the at least one opening of the female connector, and wherein, during rotation, the at least one hook of the male connector rotates into the at least one groove of the female connector. The female connector may include a spring that biases the at least one hook of the male connector against the at least one groove of the female connector.

### BRIEF DESCRIPTION OF THE DRAWINGS

Figure 1a shows a prior art lockpin.
Figure 1b shows a further example of a prior art lockpin.
Figure 2 shows an example of a lockpin and lockpin connection.
Figure 3a shows a view of a tool for allowing connection of the lockpin of Figure 2.
Figure 3b shows another view of the tool of Figure 3a.
Figure 4a shows a view of a lockpin connection in use.
Figure 4b shows another view of the lockpin connection of Figure 4a in use.

### DETAILED DESCRIPTION

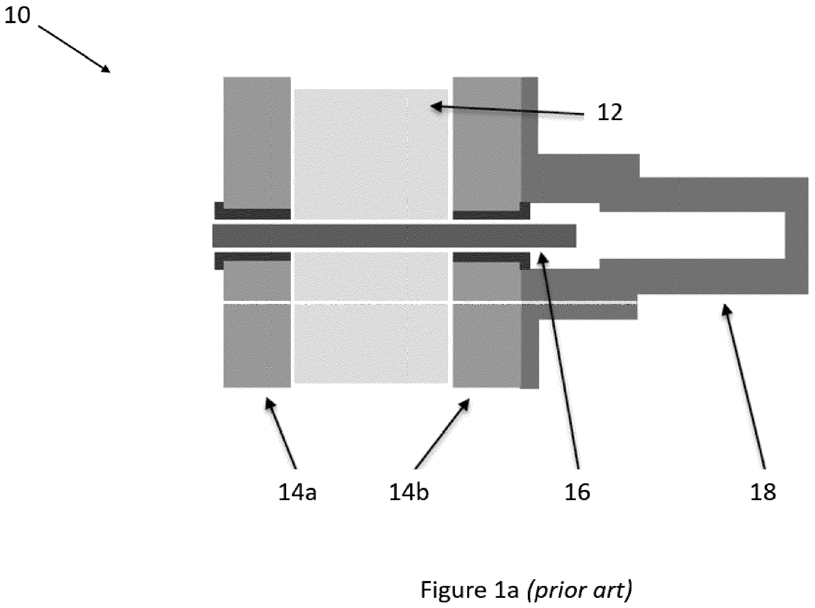

Figure 1a shows a prior art example of a lockpin in a foldable wing. The lockpin arrangement is shown generally by 10 in Figure 1a. The arrangement includes a lockpin 16, a foldable tip spar lug 12, wing spar lugs 14a and 14b, and an actuator body 18. As can be seen in Figure 1a, the lockpin 16 extends through the foldable tip spar lug 12 and the wing spar lugs 14a and 14b. The lockpin 16 extends into the actuator body 18 in use.

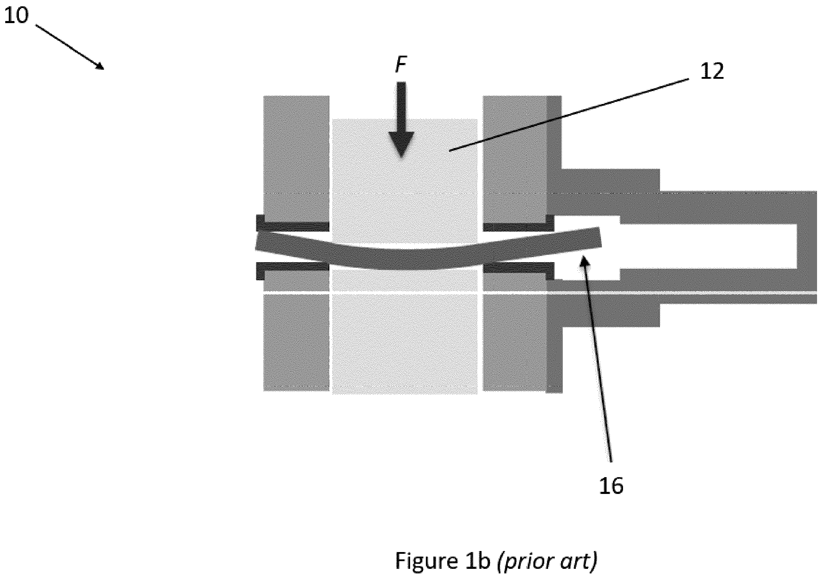

Figure 1b shows the lockpin arrangement 10 when a force, F, is applied to the foldable tip spar lug 12, in use. As can be seen in Figure 1b, the load applied by force F on the lockpin 16 can cause the lockpin 16 to deform and move axially and/or radially out of place. This can create high indeterminate loads that are transferred to the actuator body which may cause in damage to the overall system.

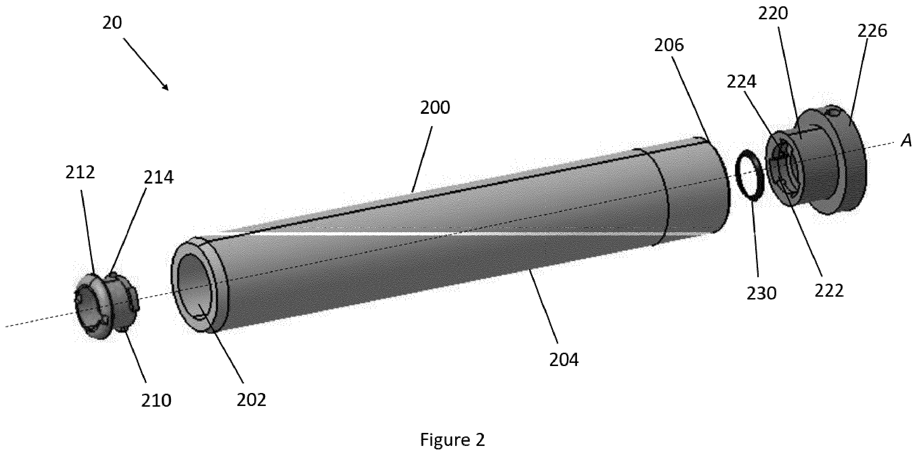

Figure 2 shows an exploded view of an example of a lockpin arrangement, shown generally as 20. The lockpin arrangement 20 includes a lockpin 200 having a first end 202 and a second end 206. The lockpin 200 includes a lockpin body 204 that extends along a longitudinal axis, A, from the first end 202 to the second end 206. At the first end 202, there is provided an opening and the lockpin 200 includes a central bore extending from the first end 202 to the second end 206.

As shown in Figure 2, a male connector 210 may be provided at the first end 202 of the lockpin 200. The male connector may include a protrusion 212 and may include at least one hook 214 provided on an opposite end of the protrusion 212. A female connector 220 is provided at a second end 206 of the lockpin 200. The female connector 220 may include at least one opening 222 sized and shaped to receive the at least one hook 214 of the male connector 210. The female connector 220 may also include at least one groove 224 sized and shaped to receive the at least one hook 214 of the male connector 210. There may be provided a spring 230 to assist with the insertion and biasing of the male connector 210 in use. Although the spring 230 is shown away from the female connector 220, it is envisaged that the spring 230 will be provided in the female connector 220 between the at least one groove 224 and a first end 226 of the female connector 220. During insertion of the male connector 210, the spring 230 compresses to allow the at least one hook 214 to enter the at least one opening 222 of the female connector 220 such that the at least one hook 214 enters the at least one groove 224 of the female connector 220. The male connector 210 is then rotated around the longitudinal axis A such that the at least one hook 214 is maintained in the at least one groove 214. The spring 230 would then decompress to ensure that the male connector 210 is biased against the at least one groove 214 for robust connection of the male connector 210 to the female connector 220.

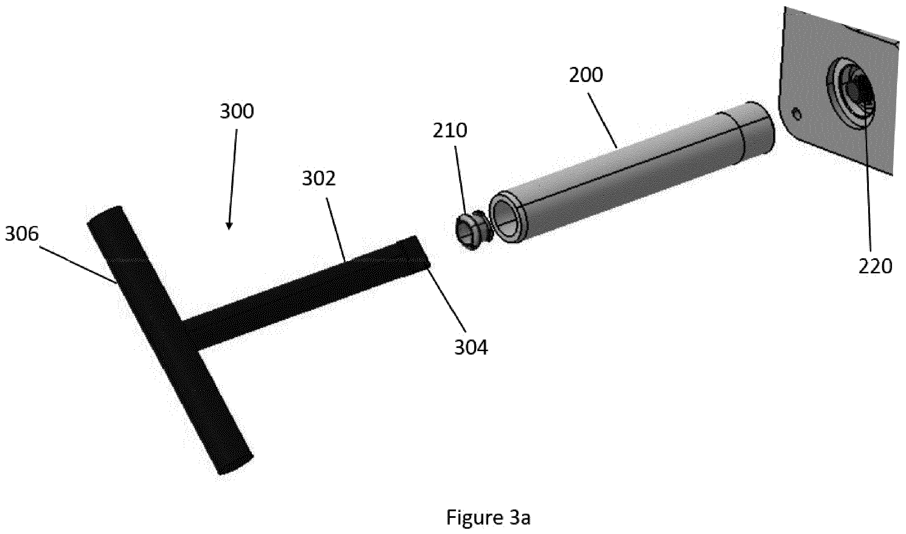

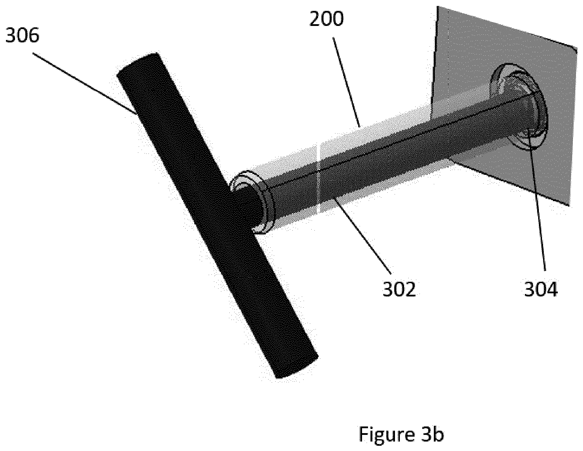

Referring now to Figures 3a and 3b, there is shown generally a tool 300 for connecting the male connector 210 with the female connector 220. The tool 300 may include a longitudinal body 302 having a first end 304 and a second end 306. The second end 306 of the body 302 may be formed as a handle 306 that extends perpendicular from the longitudinal axis of the lockpin 200. The handle 306 therefore allows for rotation of the tool 300 to connect the male connector 210 to the female connector 220. The first end 304 is adapted to mate with the male connector 210 for insertion through the lockpin 200 and into the female connector 220. As can be seen in Figure 3b, the longitudinal body 302 of the tool 300 is sized and shaped to be able to introduce the male connector 210 through the central bore of the lockpin 200 such that the male connector 210 reaches the second end 206 (shown in Figure 2) of the lockpin 200. Referring to Figures 2, 3a and 3b, during insertion of the male connector 210, by the tool 300, the spring 230 compresses to allow the at least one hook 214 to enter the at least one opening 222 of the female connector 220 such that the at least one hook 214 enters the at least one groove 224 of the female connector 220. The male connector 210 is then rotated around the longitudinal axis A, e.g. by rotation of the tool 300 through the handle 306, such that the at least one hook 214 is maintained in the at least one groove 214. After insertion, the spring 230 then decompresses to ensure that the male connector 210 is biased against the at least one groove 214 for robust connection of the male connector 210 to the female connector 220.

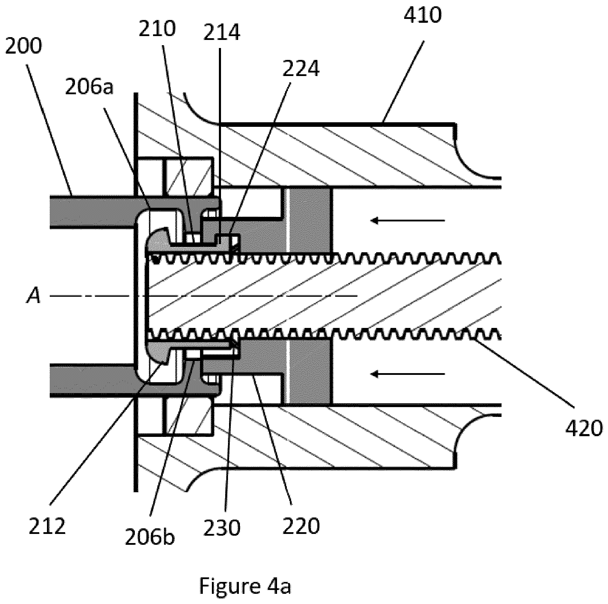

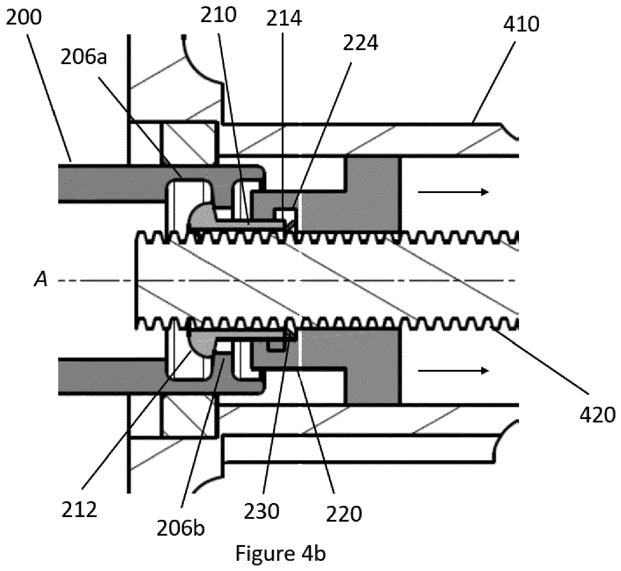

Referring now to Figures 4a and 4b, these Figures show the lockpin in use when connected in an actuator arrangement. For consistency, the reference numerals used above are present when referring to like-for-like parts, with additional reference numerals for further details.

As shown in Figure 4a, there may be provided an actuator housing 410 and an actuator screwshaft 420. A 'screwshaft' is to be understood to be a shaft that includes a screw thread. As can be seen in this Figure, the female connector 220 (i.e., the female connector 220 shown in Figure 2) is received on the actuator screwshaft 420. For example, the actuator screwshaft 420 may have a thread portion that contacts a thread portion of the female connector 220 (e.g. on an inner surface of the female connector 220). As shown in Figure 4a, the male connector 210 is already mechanically connected to the female connector 220. For example, the male connector 210 may have been introduced through the lockpin 200 as described above in relation to Figures 3a and 3b. As is further shown in Figure 4a, the second end 206 (shown generally in Figure 2) of the lockpin 200 may include a recess 206a that is configured to receive the protrusion 212 of the male connector 210. The second end 206 (shown generally in Figure 2) may also include a shoulder portion (e.g. a protrusion) 206b. The recess 206a and the shoulder portion 206b allow for the protrusion 212 of the male connector 210 to move in a longitudinal direction within the recess 206a (i.e. in a direction along the longitudinal axis A). As described above, and as shown in Figure 4a, the at least one hook 214 of the male connector 210 is received in the at least one groove 224 of the female connector 220. The spring 230 of the female connector 220 biases the at least one hook 214 of the male connector 210 to the at least one groove 224 of the female connector 220. Therefore, the male connector 210 and female connector 220 are connected. As the actuator screwshaft 420 rotates, the female connector 220 may translate along the actuator screwshaft 420 in a longitudinal direction (i.e., in a direction along the longitudinal axis A). As shown in Figure 4a, the actuator screwshaft 420 is rotated such that the female connector 220 may move in the direction of the arrows (e.g. to the left of the page). This may be known also as a load path when unlocking a foldable wing tip, for example. During unlocking, the female connector 220 moves along the actuator screwshaft 420 to contact the shoulder portion 218 of the lockpin 200. The force of the female connector 220 contacting the shoulder portion 218 of the lockpin 200 moves the lockpin 200 to an unlocked position (i.e., the lockpin 200 moves also in the direction of the arrows - for example, to the left of the page).

Figure 4b shows the arrangement of Figure 4a, in use, in the opposite direction for, for example, a locking procedure. As with Figure 4a, the rotation of the actuator screwshaft 420 such that the female connector 220 may translate along the actuator screwshaft 420 in a longitudinal direction (i.e., in a direction along the longitudinal axis A). The male connector 210 and female connector 220 are connected as described above in relation to Figure 4a, where the same components are shown. As shown in Figure 4b, the actuator screwshaft 420 is rotated such that the female connector 220 may move in the direction of the arrows (e.g. to the right of the page).

This may be known also as a load path when locking a foldable wing tip, for example. During locking, the female connector 220 moves along the actuator screwshaft 420 and, as the male connector 210 is connected to the female connector 220, the male connector moves in the same direction. The protrusion 212 of the male connector 210 moves within the recess 206a of the lockpin such that the protrusion 212 of the male connector 210 contacts the shoulder portion 218 of the lockpin 200. The force of the protrusion 212 of the male connector 210 contacting the shoulder portion 218 of the lockpin 200 moves the lockpin 200 to a locked position (i.e., the lockpin 200 moves also in the direction of the arrows - for example, to the right of the page). When the lockpin 200 is in a locked position, the recess 206a and shoulder portion 206b allow for radial movement of the lockpin 200 to prevent load transfer to the actuator housing 410.

Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1. An actuator arrangement, comprising:
an actuator screwshaft (420) configured to receive a female connector (220);
a lockpin (200) having a male connector (210);
wherein the male connector (210) is connected to the female connector (220);
wherein, when the actuator screwshaft (420) is rotated, in use, the lockpin (200) is configured to move from a first position to a second position; and
wherein the lockpin (200) includes a first end (202) and a second end (206), wherein the second end includes a recess (206a) configured to receive a protrusion (212) of the male connector (210), and wherein the second end (206) includes a shoulder portion (206b).

2. The actuator arrangement of claim 1, wherein the first position is a locked position or an unlocked position, and wherein the second position is a locked position when the first position is an unlocked position, or an unlocked position when the first position is a locked position.

3. The actuator arrangement of any preceding claim, wherein, when moving the lockpin (200) from the locked position to the unlocked position, the female connector (220) is configured to contact the shoulder portion (206b) of the second end of the lockpin, and wherein the female connector (220) is configured to apply a force to the shoulder portion (206b) to move the lockpin (200) from the locked position to the unlocked position.

4. The actuator arrangement of any preceding claim, wherein, when moving the lockpin from the unlocked position to the locked position, the protrusion (212) of the male connector (210) is configured to contact the shoulder portion (206b) of the second end of the lockpin, and wherein the protrusion (212) of the male connector (210) is configured to apply a force to the shoulder portion (206b) to move the lockpin (200) from the unlocked position to the locked position.

5. The actuator arrangement of any of claims 3 or 4, wherein, when the lockpin (200) is in a locked position, the recess (206a) and shoulder portion (206b) are configured to allow radial movement of the lockpin (200) to prevent load transfer to an actuator housing (410).

6. A kit for connecting a lockpin (200) to an actuator arrangement according to claims 1-5, said kit comprising:
an actuator arrangement having a female connector (220);
a lockpin (200) having a male connector (210) configured to connect to the female connector (220); and
a tool (300) configured to connect the male connector (210) to the female connector (220).

7. The kit of claim 6, wherein the male connector (210) includes at least one hook (214) and the female connector (220) includes at least one opening (222) and at least one groove (224), said at least one opening (222) and said at least one groove (224) configured to receive the at least one hook (214) of the male connector.

8. The kit of claim 7, wherein the female connector includes at least one spring (230) configured to bias the at least one hook (214) of the male connector to the at least one groove (224) of the female connector.

9. The kit of any of claims 6-8, wherein the tool (300) includes a first end (304) and a second end (306), and wherein the first end (304) is configured to receive the male connector (210).

10. The kit of claim 9, wherein the lockpin (200) further comprises a central bore, and wherein the first end (304) of the tool is configured to insert the male connector (210) through the central bore of the lockpin (200) to mate with the female connector (220) of the actuator arrangement.

11. The kit of claim 10, wherein the tool (300) includes a handle (306) that is configured to rotate the tool such that the male connector (210) connects to the female connector (220).

12. A method of connecting a lockpin to an actuator arrangement as claimed in claim 1, the method comprising:
providing a tool having a first end and a second end, wherein the tool receives the male connector at the first end;
moving the first end of the tool through a central bore of the lockpin such that the male connector engages with the female connector;
rotating the tool such that the male connector rotates to retain its position in a groove provided in the female connector;
removing the tool.

13. The method of claim 12, wherein the male connector includes at least one hook and the female connector includes at least one opening and at least one groove, said at least one opening and said at least one groove configured to receive the at least one hook of the male connector, wherein, when the male connector engages the female connector, the at least one hook of the male connector moves through the at least one opening of the female connector, and wherein, during rotation, the at least one hook of the male connector rotates into the at least one groove of the female connector.

14. The method of claim 13, wherein the female connector includes a spring that biases the at least one hook of the male connector against the at least one groove of the female connector.

## Patentansprüche

1. Stellantriebsanordnung, umfassend:
eine Stellantriebs-Schraubenwelle (420), die so ausgebildet ist, dass sie einen Buchsenverbinder (220) aufnimmt;
einen Sicherungsstift (200), der einen Steckverbinder (210) aufweist;
wobei der Steckverbinder (210) mit dem Buchsenverbinder (220) verbunden ist;
wobei der Sicherungsstift (200) so ausgebildet ist, dass er sich im Betrieb, wenn die Stellantriebs-Schraubenwelle (420) gedreht wird, von einer ersten Position in eine zweite Position bewegt; und
wobei der Sicherungsstift (200) ein erstes Ende (202) und ein zweites Ende (206) einschließt, wobei das zweite Ende eine Vertiefung (206a) einschließt, die so ausgebildet ist, dass sie einen Vorsprung (212) des Steckverbinders (210) aufnimmt, und wobei das zweite Ende (206) einen Schulterabschnitt (206b) einschließt.

2. Stellantriebsanordnung nach Anspruch 1, wobei die erste Position eine verriegelte Position oder eine entriegelte Position ist, und wobei die zweite Position eine verriegelte Position ist, wenn die erste Position eine entriegelte Position ist, oder eine entriegelte Position, wenn die erste Position eine verriegelte Position ist.

3. Stellantriebsanordnung nach einem der vorhergehenden Ansprüche, wobei beim Bewegen des Sicherungsstifts (200) von der verriegelten Position in die entriegelte Position der Buchsenverbinder (220) so ausgebildet ist, dass er den Schulterabschnitt (206b) des zweiten Endes des Sicherungsstifts berührt, und wobei der Buchsenverbinder (220) so ausgebildet ist, dass er eine Kraft auf den Schulterabschnitt (206b) ausübt, um den Sicherungsstift (200) von der verriegelten Position in die entriegelte Position zu bewegen.

4. Stellantriebsanordnung nach einem der vorhergehenden Ansprüche, wobei beim Bewegen des Sicherungsstifts von der entriegelten Position in die verriegelte Position der Vorsprung (212) des Steckverbinders (210) so ausgebildet ist, dass er den Schulterabschnitt (206b) des zweiten Endes des Sicherungsstifts berührt, und wobei der Vorsprung (212) des Steckverbinders (210) so ausgebildet ist, dass er eine Kraft auf den Schulterabschnitt (206b) ausübt, um den Sicherungsstift (200) von der entriegelten Position in die verriegelte Position zu bewegen.

5. Stellantriebsanordnung nach einem der Ansprüche 3 oder 4, wobei, wenn sich der Sicherungsstift (200) in einer verriegelten Position befindet, die Vertiefung (206a) und der Schulterabschnitt (206b) so ausgebildet sind, dass sie eine radiale Bewegung des Sicherungsstifts (200) ermöglichen, um eine Lastübertragung auf ein Stellantriebsgehäuse (410) zu verhindern.

6. Satz zum Verbinden eines Sicherungsstifts (200) mit einer Stellantriebsanordnung nach den Ansprüchen 1 bis 5, wobei der Satz umfasst:
eine Stellantriebsanordnung mit einem Buchsenverbinder (220);
einen Sicherungsstift (200), der einen Steckverbinder (210) aufweist, der so ausgebildet ist, dass er mit dem Buchsenverbinder (220) verbunden wird; und
ein Werkzeug (300), das so ausgebildet ist, dass es den Steckverbinder (210) mit dem Buchsenverbinder (220) verbindet.

7. Satz nach Anspruch 6, wobei der Steckverbinder (210) mindestens einen Haken (214) einschließt und der Buchsenverbinder (220) mindestens eine Öffnung (222) und mindestens eine Nut (224) einschließt, wobei die mindestens eine Öffnung (222) und die mindestens eine Nut (224) so ausgebildet sind, dass sie den mindestens einen Haken (214) des Steckverbinders aufnehmen.

8. Satz nach Anspruch 7, wobei der Buchsenverbinder mindestens eine Feder (230) einschließt, die so ausgebildet ist, dass sie den mindestens einen Haken (214) des Steckverbinders zu der mindestens einen Nut (224) des Buchsenverbinders hin vorspannt.

9. Satz nach einem der Ansprüche 6 bis 8, wobei das Werkzeug (300) ein erstes Ende (304) und ein zweites Ende (306) einschließt, und wobei das erste Ende (304) so ausgebildet ist, dass es den Steckverbinder (210) aufnimmt.

10. Satz nach Anspruch 9, wobei der Sicherungsstift (200) weiter eine zentrale Bohrung einschließt, und wobei das erste Ende (304) des Werkzeugs so ausgebildet ist, dass es den Steckverbinder (210) durch die zentrale Bohrung des Sicherungsstifts (200) einführt, um mit dem Buchsenverbinder (220) der Stellantriebsanordnung zusammenzupassen.

11. Satz nach Anspruch 10, wobei das Werkzeug (300) einen Griff (306) einschließt, der so ausgebildet ist, dass er das Werkzeug dreht, sodass der Steckverbinder (210) mit dem Buchsenverbinder (220) verbunden wird.

12. Verfahren zum Verbinden eines Sicherungsstifts mit einer Stellantriebsanordnung nach Anspruch 1, das Verfahren umfassend:
Bereitstellen eines Werkzeugs mit einem ersten Ende und einem zweiten Ende, wobei das Werkzeug den Steckverbinder am ersten Ende aufnimmt;
Bewegen des ersten Endes des Werkzeugs durch eine zentrale Bohrung des Sicherungsstifts, sodass der Steckverbinder in den Buchsenverbinder eingreift;
Drehen des Werkzeugs, sodass sich der Steckverbinder dreht, um seine Position in einer in dem Buchsenverbinder vorgesehenen Nut zu halten;
Entfernen des Werkzeugs.

13. Verfahren nach Anspruch 12, wobei der Steckverbinder mindestens einen Haken einschließt und der Buchsenverbinder mindestens eine Öffnung und mindestens eine Nut einschließt, wobei die mindestens eine Öffnung und die mindestens eine Nut so ausgebildet sind, dass sie den mindestens einen Haken des Steckverbinders aufnehmen, wobei, wenn der Steckverbinder in den Buchsenverbinder eingreift, sich der mindestens eine Haken des Steckverbinders durch die mindestens eine Öffnung des Buchsenverbinders bewegt, und wobei sich während der Drehung der mindestens eine Haken des Steckverbinders in die mindestens eine Nut des Buchsenverbinders eindreht.

14. Verfahren nach Anspruch 13, wobei der Buchsenverbinder eine Feder einschließt, die den mindestens einen Haken des Steckverbinders gegen die mindestens eine Nut des Buchsenverbinders vorspannt.

## Revendications

1. Agencement d'actionneur, comprenant :
un arbre à vis d'actionneur (420) configuré pour recevoir un connecteur femelle (220) ;
une goupille de verrouillage (200) ayant un connecteur mâle (210) ;
dans lequel le connecteur mâle (210) est connecté au connecteur femelle (220) ;
dans lequel, lorsque l'arbre à vis d'actionneur (420) est tourné, lors d'une utilisation, la goupille de verrouillage (200) est configurée pour se déplacer d'une première position à une seconde position ; et
dans lequel la goupille de verrouillage (200) comporte une première extrémité (202) et une seconde extrémité (206), dans lequel la seconde extrémité comporte un évidement (206a) configuré pour recevoir une saillie (212) du connecteur mâle (210), et dans lequel la seconde extrémité (206) comporte une partie d'épaulement (206b).

2. Agencement d'actionneur selon la revendication 1, dans lequel la première position est une position verrouillée ou une position déverrouillée, et dans lequel la seconde position est une position verrouillée lorsque la première position est une position déverrouillée, ou une position déverrouillée lorsque la première position est une position verrouillée.

3. Agencement d'actionneur selon une quelconque revendication précédente, dans lequel, lors du déplacement de la goupille de verrouillage (200) de la position verrouillée à la position déverrouillée, le connecteur femelle (220) est configuré pour entrer en contact avec la partie d'épaulement (206b) de la seconde extrémité de la goupille de verrouillage, et dans lequel le connecteur femelle (220) est configuré pour appliquer une force à la partie d'épaulement (206b) pour déplacer la goupille de verrouillage (200) de la position verrouillée à la position déverrouillée.

4. Agencement d'actionneur selon une quelconque revendication précédente, dans lequel, lors du déplacement de la goupille de verrouillage de la position déverrouillée à la position verrouillée, la saillie (212) du connecteur mâle (210) est configurée pour entrer en contact avec la partie d'épaulement (206b) de la seconde extrémité de la goupille de verrouillage, et dans lequel la saillie (212) du connecteur mâle (210) est configurée pour appliquer une force à la partie d'épaulement (206b) pour déplacer la goupille de verrouillage (200) de la position déverrouillée à la position verrouillée.

5. Agencement d'actionneur selon l'une quelconque des revendications 3 ou 4, dans lequel, lorsque la goupille de verrouillage (200) est dans une position verrouillée, l'évidement (206a) et la partie d'épaulement (206b) sont configurés pour permettre un mouvement radial de la goupille de verrouillage (200) pour empêcher le transfert de charge vers un boîtier d'actionneur (410).

6. Kit pour connecter une goupille de verrouillage (200) à un agencement d'actionneur selon les revendications 1-5, ledit kit comprenant :
un agencement d'actionneur ayant un connecteur femelle (220) ;
une goupille de verrouillage (200) ayant un connecteur mâle (210) configuré pour se connecter au connecteur femelle (220) ; et
un outil (300) configuré pour connecter le connecteur mâle (210) au connecteur femelle (220).

7. Kit selon la revendication 6, dans lequel le connecteur mâle (210) comporte au moins un crochet (214) et le connecteur femelle (220) comporte au moins une ouverture (222) et au moins une rainure (224), ladite au moins une ouverture (222) et ladite au moins une rainure (224) étant configurées pour recevoir l'au moins un crochet (214) du connecteur mâle.

8. Kit selon la revendication 7, dans lequel le connecteur femelle comporte au moins un ressort (230) configuré pour solliciter l'au moins un crochet (214) du connecteur mâle vers l'au moins une rainure (224) du connecteur femelle.

9. Kit selon l'une quelconque des revendications 6-8, dans lequel l'outil (300) comporte une première extrémité (304) et une seconde extrémité (306), et dans lequel la première extrémité (304) est configurée pour recevoir le connecteur mâle (210).

10. Kit selon la revendication 9, dans lequel la goupille de verrouillage (200) comprend en outre un alésage central, et dans lequel la première extrémité (304) de l'outil est configurée pour insérer le connecteur mâle (210) à travers l'alésage central de la goupille de verrouillage (200) pour s'accoupler avec le connecteur femelle (220) de l'agencement d'actionneur.

11. Kit selon la revendication 10, dans lequel l'outil (300) comporte une poignée (306) qui est configurée pour faire tourner l'outil de sorte que le connecteur mâle (210) se connecte au connecteur femelle (220).

12. Procédé de connexion d'une goupille de verrouillage à un agencement d'actionneur selon la revendication 1, le procédé comprenant :
la fourniture d'un outil ayant une première extrémité et une seconde extrémité, dans lequel l'outil reçoit le connecteur mâle à la première extrémité ;
le déplacement de la première extrémité de l'outil à travers un alésage central de la goupille de verrouillage de sorte que le connecteur mâle soit en prise avec le connecteur femelle ;
la rotation de l'outil de sorte que le connecteur mâle tourne pour maintenir sa position dans une rainure prévue dans le connecteur femelle ;
le retrait de l'outil.

13. Procédé selon la revendication 12, dans lequel le connecteur mâle comporte au moins un crochet et le connecteur femelle comporte au moins une ouverture et au moins une rainure, ladite au moins une ouverture et ladite au moins une rainure étant configurées pour recevoir l'au moins un crochet du connecteur mâle, dans lequel, lorsque le connecteur mâle est en prise avec le connecteur femelle, l'au moins un crochet du connecteur mâle se déplace à travers l'au moins une ouverture du connecteur femelle, et dans lequel, pendant la rotation, l'au moins un crochet du connecteur mâle tourne dans l'au moins une rainure du connecteur femelle.

14. Procédé selon la revendication 13, dans lequel le connecteur femelle comporte un ressort qui sollicite l'au moins un crochet du connecteur mâle par rapport à l'au moins une rainure du connecteur femelle.
